# EUROPÄISCHE PATENTSCHRIFT

(11) **EP 0 771 704 B1**
(45) Veröffentlichungstag und Bekanntmachung des Hinweises auf die Patenterteilung: **15.03.2000**
(21) Anmeldenummer: 96114360.9
(22) Anmeldetag: 07.09.1996
(51) Int. Cl.: B60S 1/48, F01P 11/02

(54) **Flüssigkeitsbehälter**
Liquid container
Récipient pour liquides

(30) Priorität: 02.11.1995 DE 19540817
(43) Veröffentlichungstag der Anmeldung: 07.05.1997
(73) Patentinhaber: ROBERT BOSCH GMBH, 70442 Stuttgart (DE)
(72) Erfinder: Peter, Cornelius, Dipl.-Ing., 77815 Bühl (DE); Frankenhauser, Bruno, Dr.-Ing., 73035 Göppingen (DE); Jauernig, Peter, Dipl.-Ing., 75233 Tiefenbronn (DE)

(56) Entgegenhaltungen:
- EP-A- 0 213 414
- DE-A- 3 704 325
- DE-A- 4 103 523
- GB-A- 2 241 638

## Beschreibung

### Stand der Technik

Die Erfindung betrifft einen Flüssigkeitsbehälter nach dem Oberbegriff des Hauptanspruchs. Derartige Flüssigkeitsbehälter sind aus der EP-A-0 213 414 bekannt und werden in Kraftfahrzeugen zum Aufbewahren der Ausgleichsflüssigkeit für den Kühlkreislauf und der Scheibenwaschflüssigkeit verwendet. In der Regel sind die beiden Behälter getrennt im Motorraum untergebracht.

### Vorteile

Der erfindungsgemäße Flüssigkeitsbehälter mit den Merkmalen des Hauptanspruchs hat den Vorteil, daß nur ein Behälter vorgesehen ist, mit zwei Kammern, der platzsparend und mit wenigen Befestigungsmitteln im Motorraum anbringbar ist. Ferner wird durch den engen Kontakt der beiden Kammern ein das Scheibenwaschwasser erwärmender Wärmeübergang vom Kühlwasser geschaffen, wodurch die Reinigungsfähigkeit des Scheibenwaschwassers erhöht und im Winter die Vereisungsgefahr vermindert wird.

Die räumliche Nähe der beiden Flüssigkeitskammern bedingt eine räumliche Nähe der Einfüllöffnungen, so daß die Gefahr besteht, daß insbesondere bei schlechten Lichtverhältnissen der falsche Deckel geöffnet wird. Dies birgt ein Risiko, weil der Kühlmittelausgleichsbehälter in der Regel unter Druck steht. Diesem Umstand trägt die Erfindung dadurch Rechnung, daß verwechslungssichere Verschlüsse eingesetzt werden, deren verschließbare Einfüllöffnungen nebeneinander angeordnet sind, wobei der Verschluß der einen den Verschluß der anderen Öffnung zumindest teilweise übergreift. Dadurch ist auf einfache Weise sichergestellt, daß die Verschlüsse nur nacheinander geöffnet werden können. Auf diese Weise läßt sich erreichen, daß das unter Druck stehende Kühlwasser nicht versehentlich geöffnet wird, wenn tatsächlich nur das Scheibenwaschwasser nachgefüllt werden soll.

Durch die in den Unteransprüchen aufgeführten Maßnahmen sind vorteilhafte Weiterbildungen des Flüssigkeitsbehälters nach dem Hauptanspruch möglich. So wird in vorteilhafter Weise der Wärmeübergang vom Kühlwasser auf das Scheibenwaschwasser erhöht, wenn die eine Kammer die andere Kammer zumindest bereichsweise umgibt.

Bei abnehmbaren Verschlußkappen, insbesondere Schraubverschlüssen kann der eine Verschluß den anderen in einfacher Weise mit einem radial abstehenden Rand übergreifen. Behälter die mindestens zwei getrennte Kammern aufweisen, lassen sich kostengünstig aus Kunstoff fertigen, wobei der Behälter in vorteilhafter Weise aus zwei Hälften besteht, die zusammengeschweißt werden.

### Zeichnung

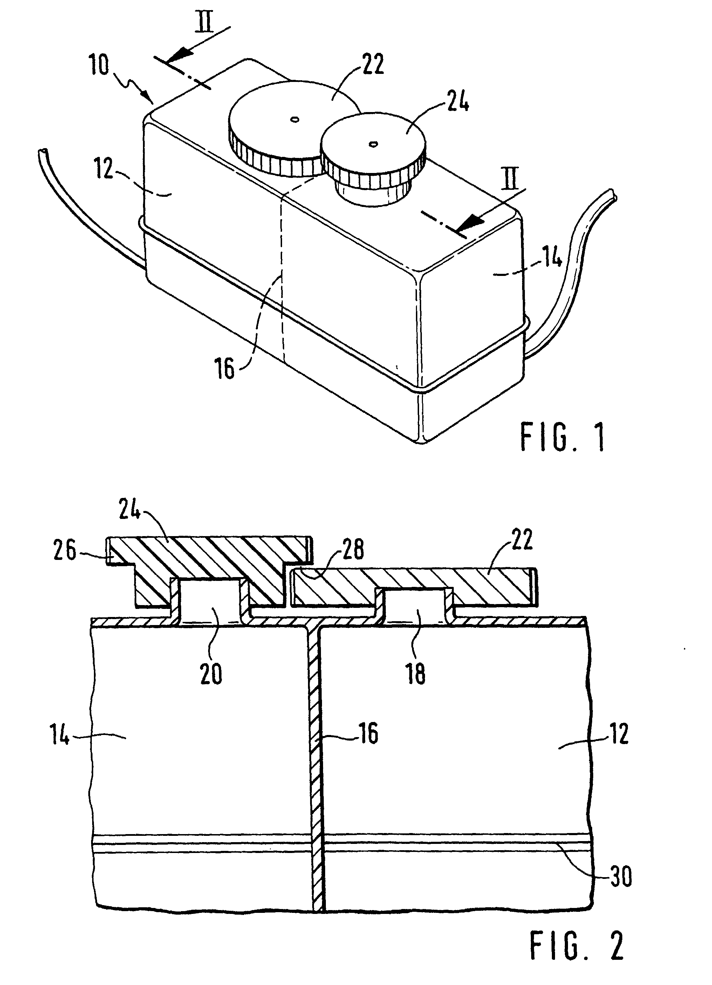

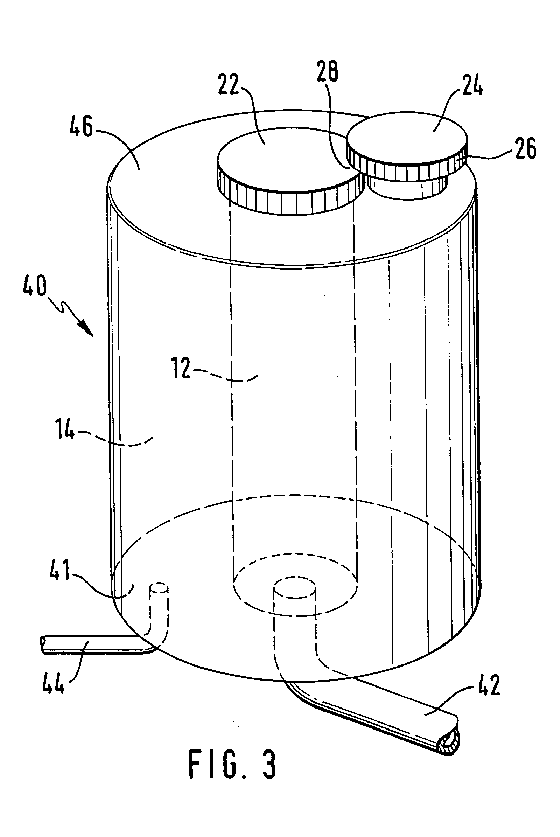

In der Zeichnung sind zwei Ausführungsbeispiele des erfindungsgemäßen Flüsssigkeitsbehälters dargestellt und in der nachfolgenden Beschreibung näher erläutert. Es zeigen Figur 1 eine perspektivische Ansicht des ersten Ausführungsbeispiels, Figur 2 einen Schnitt nach Linie II-II in Figur 1 und Figur 3 ein zweites Ausführungsbeispiel in perspektivischer Darstellung.

### Beschreibung

In Figur 1 ist ein Flüssigkeitsbehälter 10 mit einer ersten Kammer 12 als Kühlflüssigkeits-Ausgleichsgefäß, einer zweiten Kammer 14 für die Scheibenwaschflüssigkeit und einer die Kammern unterteilenden Wand 16 gezeigt. Die Kammern 12 und 14 weisen Öffnungen 18 und 20 (Figur 2) auf, die mittels kappenartigen Verschlüssen 22 und 24 verschließbar sind. Diese Verschlüsse 22, 24 sind in der Regel Schraubverschlüsse (in der Zeichnung nicht dargestellt) und unterscheiden sich in der äußeren Form dadurch, daß der Verschluß 22 flacher und im Durchmesser größer als der Verschluß 24 und somit rein optisch unverwechselbar ausgebildet ist.

Der Verschluß 24 für die zweite Kammer 14 weist einen oberen Rand 26 auf, mit dem er in einem Bereich 28 den Verschluß 22 für die erste Kammer 12 übergreift. Dadurch ist gewährleistet, daß die Reihenfolge des Öffnens festgelegt ist, da der Verschluß 22 ohne Rand erst nach dem Entfernen des Verschlusses 24 mit dem Rand 26 geöffnet werden kann. Die Verwechslungssicherheit ist auf diese Weise mechanisch gewährleistet. Durch die Ausbildung der Verschüsse als Schraubverschlüsse, ist verhindert, daß auch ein erhöhter Kraftaufwand beim Abziehen des randlosen Verschusses 24 nicht dazu führt, daß auch der Verschluß 22 mit Rand 26 gleichzeitig und vielleicht unbemerkt abgezogen werden kann. Dies könnte sonst bei unter Druck stehender heißer Kühlflüssigkeit in der ersten Kammer 12 gefährlich werden.

In einem mittleren Bereich weist der ungefähr quaderförmige Flüssigkeitsbehälter 10 eine Schweißnaht 30 auf, die bei der Herstellung durch das Zusammenfügen eines Ober- und eines Unterteils angebracht wird. Das Ober- und das Unterteil werden getrennt, bspw. als Spritzgußteile hergestellt.

Beim zweiten Ausführungsbeispiel (Figur 3) sind gleiche Bauteile mit gleichen Bezugszahlen gekennzeichnet. Der Flüssigkeitsbehälter 40 nach dem zweiten Ausführungsbeispiel ist zylinderförmig und die erste Kammer 12 wird von der zweiten Kammer 14 rotationssymmetrisch umgeben. An einer unteren Stirnseite 41 als gemeinsamer Boden befinden sich die Anschlüsse 42 und 44, über die sich in den Kammern 12 und 14 befindenden Flüssigkeiten entnommen werden können. Auf der anderen oberen Stirnseite 46 sind die Einfüllöffnungen angeordnet, die je mit einem Verschluß 22 und 24 verschlossen sind. Auch hier übergreift der eine Verschluß 24 mit einem Rand 26 den anderen Verschluß 22.

Durch die rotationssymmetrische Ausrichtung und durch das Anordnen des Kühlflüssigkeitsbehälters innerhalb des Scheibenwaschbehälters wird ein möglicher Wärmeübergang vom erwärmten Kühlwasser auf das Scheibenwasser optimal ausgenutzt. Die Reinigungswirkung des Scheibenwaschwassers wird durch die Erwärmung merklich erhöht. Der Verschluß 22 ist in den beiden Ausführungsbeispielen als einfacher Schraubverschluß dargestellt. Es ist jedoch auch möglich, wenn die Kammer 12 mit der Kühlflüssigkeit unter Überdruck steht, den Verschluß 22 mit einem Überdruckventil auszustatten. Dies ist insbesondere dann sinnvoll, wenn diese Kammer 12 als Ausgleichsbehälter für die Kühlflüssigkeit eines Kraftfahrzeugs dient.

## Patentansprüche

1. Flüssigkeitsbehälter, insbesondere für die Kühlflüssigkeit und die Scheibenwaschflüssigkeit eines Kraftfahrzeugs, mit mindestens zwei getrennten Kammern (12,14), die in wärmeaustauschendem Kontakt miteinander stehen und jeweils mit einer Einfüllöffnung (18, 20) versehen sind, wobei die Einfüllöffnungen (18, 20) verwechslungssichere Verschlüsse (22, 24) aufweisen, dadurch gekennzeichnet, daß die verschließbaren Einfüllöffnungen (18, 20) nebeneinander angeordnet sind und daß der Verschluß (24) der einen Öffnung (20) den Verschluß (22) der anderen Öffnung (18) zumindest teilweise übergreift.

2. Flüssigkeitsbehälter nach Anspruch 1, dadurch gekennzeichnet, daß die eine Kammer (14) die andere Kammer (12) zumindest bereichsweise umgibt.

3. Flüssigkeitsbehälter nach einem der Ansprüche 1 oder 2, dadurch gekennzeichnet, daß die Verschlüsse (22, 24) Schraubverschlüsse sind und ein Schraubverschluß (24) einen den anderen Schraubverschluß (22) übergreifenden Rand (26) aufweist.

4. Flüssigkeitsbehälter nach einem der vorhergehenden Ansprüche, dadurch gekennzeichnet, daß der Behälter (10) aus Kunststoff ist.

5. Flüssigkeitsbehälter nach Anspruch 4, dadurch gekennzeichnet, daß der Behälter (10) aus zwei Hälften zusammengeschweißt ist.

6. Flüssigkeitbehälter nach einem der Ansprüche 1 bis 4, dadurch gekennzeichnet, daß die Kammer (12) für die Kühlflüssigkeit ein Kühlflüssigkeits-Ausgleichsgefäß ist, welches innerhalb der Kammer (14) für die Scheibenwaschflüssigkeit angeordnet ist.

7. Flüssigkeitsbehälter nach Anspruch 6, dadurch gekennzeichnet, daß die zwei Kammern (12, 14) einen gemeinsamen Boden (41) aufweisen, in welchem sich für jede Kammer jeweils ein Anschluß (42, 44) befindet.

## Claims

1. Liquid container, in particular for the cooling liquid and the washer fluid of a motor vehicle, having at least two separate chambers (12, 14), which are in heat-exchanging contact with each other and are each provided with a feed opening (18, 20), the feed openings (18, 20) having non-confusable caps (22, 24), characterized in that the closable feed openings (18, 20) are arranged next to each other, and in that the cap (24) of one opening (20) at least partially fits over the cap (22) of the other opening (18).

2. Liquid container according to Claim 1, characterized in that one chamber (14) surrounds at least some areas of the other chamber (12).

3. Liquid container according to either of claims 1 or 2, characterized in that the caps (22, 24) are screw-type caps and one screw-type cap (24) has an edge (26) which fits over the other screw-type cap (22).

4. Liquid container according to one of the preceding claims, characterized in that the container (10) is made of plastic.

5. Liquid container according to Claim 4, characterized in that the container (10) is welded together from two halves.

6. Liquid container according to one of Claims 1 to 4, characterized in that the chamber (12) for the cooling liquid is a cooling-liquid expansion tank which is arranged within the chamber (14) for the washer fluid.

7. Liquid container according to Claim 6, characterized in that the two chambers (12, 14) have a common base (41) in which a respective connection (42, 44) for each chamber is situated.

## Revendications

1. Récipient pour liquides, en particulier pour le liquide de refroidissement et le liquide du lave-glace d'un véhicule à moteur, avec au moins deux chambres séparées (12, 14) qui sont en contact l'une avec l'autre d'échange de chaleur et qui sont respectivement pourvues d'un orifice de remplissage (18, 20), les orifices de remplissage (18, 20) présentant des fermetures (22, 24) que l'on ne peut pas confondre,
caractérisé en ce que
• les orifices de remplissage (18, 20) que l'on peut fermer sont disposés côte à côte et
• la fermeture (24) de l'un des orifices, l'orifice (20) vient en prise avec la fermeture (22) de l'autre orifice (18) au moins en partie.

2. Récipient pour liquides selon la revendication 1,
caractérisé en ce que
l'une des chambres, la chambre (14), entoure l'autre chambre (12) au moins localement.

3. Récipient pour liquides selon l'une des revendications 1 ou 2,
caractérisé en ce que
• les fermetures (22, 24) sont des fermetures à vis, et
• une fermeture à vis (24) présente un bord (26) qui vient en prise avec l'autre fermeture à vis (22).

4. Récipient pour liquides selon l'une des revendications précédentes,
caractérisé en ce que
le récipient (10) est en matière plastique.

5. Récipient pour liquides selon la revendication 4,
caractérisé en ce que
le récipient (10) est réalisé à partir de deux moitiés qui sont soudées ensemble.

6. Récipient pour liquides selon l'une des revendications 1 à 4,
caractérisé en ce que
la chambre (12) pour le liquide de refroidissement est un récipient de détente du liquide de refroidissement, qui est disposé à l'intérieur de la chambre (14) pour le liquide du lave-glace.

7. Récipient pour liquides selon la revendication 6,
caractérisé en ce que
les deux chambres (12, 14) présentent un fond commun (41) dans lequel se trouve pour chaque chambre respectivement un raccord (42, 44).
